# EUROPEAN PATENT APPLICATION

(11) **EP 2 587 624 A1**
(43) Date of publication of application: **01.05.2013**
(21) Application number: 11824306.2
(22) Date of filing: 14.10.2011
(51) Int. Cl.: H02J 13/00, H02J 7/35

(54) **POWER MANAGEMENT SYSTEM**

(30) Priority: 15.10.2010 JP 2010233109
(71) Applicant: Sanyo Electric Co., Ltd., Osaka 570-8677 (JP)
(72) Inventor: YAMADA, Ken, Moriguchi-shi Osaka 570-8677 (JP); SUGATA, Takuji, Moriguchi-shi Osaka 570-8677 (JP)
(74) Representative: Glawe, Delfs, Moll
(86) International application number: PCT/JP2011/073720
(87) International publication number: WO 2012/050208

(57) **Abstract**

A management system (28) includes a plurality of power management sections (32), (36), (38), (40), and (42) which manage respective power information, by dividing the power information of an entire facility complex into a plurality of management ranges, and a system controller (30) which is connected to each of the power management sections (32), (36), (38), (40), and (42) by a communication element and executes power management of the entire facility complex. Data such as a saved energy amount, CO₂ reduction amount and the like calculated in the system controller (30) is displayed by a display section (48).

## Description

### TECHNICAL FIELD

The present invention relates to a management system which manages electric power and more particularly to a management system which performs energy-saving management and the like for the entirety of a facility complex including a plurality of facilities.

### BACKGROUND ART

In order to manage setting of operations of various types of equipment in a centralized manner such as on/off of lighting devices, temperature setting of air conditioning devices in various types of equipment in buildings, houses and the like, a control panel is provided, and a function which allows visual understanding of operating states of the devices might be added to the control panel. In view of the recent environmental problems and cost reduction through reduction of heating and electricity charges, display of not only the operating states of the devices but also consumption states of electric energy of a building and the like on a display device or the like has begun.

For example, Patent Literature 1 describes display of a power consumption state using a programmable display connected capable of communication to a device to be controlled and a controller which controls the device. This programmable display includes a communication portion connected to the device and the controller, data memory which stores power consumption data of each device, a calculation portion which estimates the power consumption of a power distribution system configured by a combination of a plurality of devices on the basis of the power consumption data, a touch panel for selecting the device, and a display screen which displays an image of the device or displays a power consumption state image changing in accordance with a power consumption estimated value. The power consumption state image is displayed in numeral values, characters, patterns, figures, number of displayed figures, coloring or the like. Patent Literature 1 describes that energy saving consciousness is improved by displaying the power consumption state on a real time basis as above.

Moreover, Patent Literature 2 discloses that a natural energy generating device is arranged in a household of each employee of a company as a surplus power management system, a data controller collects the total amount of surplus power of each of the natural energy generating devices, a contract to sell and buy surplus electric power of this natural energy generating device is concluded between the employees and the company, the company acquires consideration corresponding to the total amount of the surplus power of each of the natural energy generating devices from an electric power supplier and obtains information of the quantity according to CO₂ reduction from the data controller regarding supply and demand of the electric power.

### CITATION LIST

### PATENT LITERATURE

Patent Literature 1: Japanese Patent Laid-Open Publication No. 2010-145169
Patent Literature 2: Japanese Patent Laid-Open Publication No. 2007-72934

### SUMMARY OF INVENTION

### TECHNICAL PROBLEM

In order to handle the recent environmental problems, energy-saving measures for suppressing power consumption by finely managing operation states of various types of equipment are taken, in addition to use of natural energy generation such as solar power generation and the like. These are executed for each device in many cases, and CO₂ reduction effects and energy-saving effects cannot be gained for the entire facility complex including a plurality of facilities.

It is an advantage of the present invention to provide a management system which allows energy-saving control in a facility complex including a plurality of facilities. Another advantage is to provide a management system for obtaining the CO₂ reduction effects in a facility complex. The following configurations contribute to at least one of these advantages.

### SOLUTION TO PROBLEM

A management system according to the present invention is a management system including a plurality of power management section which manage power information of a facility complex including a plurality of facilities divided into a plurality of management ranges, and a system controller connected to the plurality of power management sections with communication elements, obtaining the power information in each management range and controlling the power information of the entire facility complex on the basis of the obtained power information, and the system controller produces a charging/discharging instruction on the basis of the power information of the entire facility complex and transmits the charging/discharging instruction to a charging/discharging control section.

### ADVANTAGEOUS EFFECT OF INVENTION

By means of the above configuration, the management system manages the power information of the facility complex divided into the plurality of management ranges, produces data of the power information of the facility complex, and executes charging/discharging control so that efficient energy management can be realized for the entire facility complex.

### BRIEF DESCRIPTION OF DRAWINGS

[FIG. 1] FIG. 1 is a diagram illustrating an example of a facility complex to which a management system of an embodiment according to the present invention is applied.
[FIG. 2] FIG. 2 is a diagram for explaining a flow of power information and an instruction in the management system of the embodiment according to the present invention.
[FIG. 3] FIG. 3 is a diagram for explaining a state of acquiring of the entire actual power consumption of the facility complex in the management system of the embodiment according to the present invention.
[FIG. 4] FIG. 4 is a diagram for explaining a state of setting of an energy-saving level in the management system of the embodiment according to the present invention.
[FIG. 5] FIG. 5 is a diagram for explaining a display screen illustrating a state of energy-saving control and a state of CO₂ reduction effects in a display section of the management system of the embodiment according to the present invention.
[FIG. 6] FIG. 6 is a diagram for explaining a state of a shift of power consumption and a shift and the like of self-supplied power in graph display in the display section of the management system of the embodiment according to the present invention.
[FIG. 7] FIG. 7 is a diagram illustrating an example of another display screen in the display section of the management system of the embodiment according to the present invention.

### DESCRIPTION OF EMBODIMENTS

An embodiment according to the present invention will be described below in detail by using the attached drawings. In the following description, a lithium ion battery will be described as a storage battery, but it may be a secondary battery other than this. For example, the battery may be a nickel hydrogen battery, a nickel cadmium battery and the like. A power storage device is configured by combining a plurality of storage batteries in order to obtain electric power required by a load. Therefore, the number of storage batteries constituting the power storage device may be set as appropriate in accordance with the specification of the management system which manages the electric power.

An external commercial power supply and a photoelectric conversion module which conducts solar power generation will be described below as power sources, but other power sources such as a wind power generator or the like may be used. Moreover, the number, power and the like described below are exemplifications for explanation, and changes can be made as appropriate in accordance with power specification of the management system and the like.

The same reference numerals are given to the similar elements in all the figures below, and duplicated explanation will be omitted. Moreover, the previously described reference numerals are used as necessary in the explanation in the description.

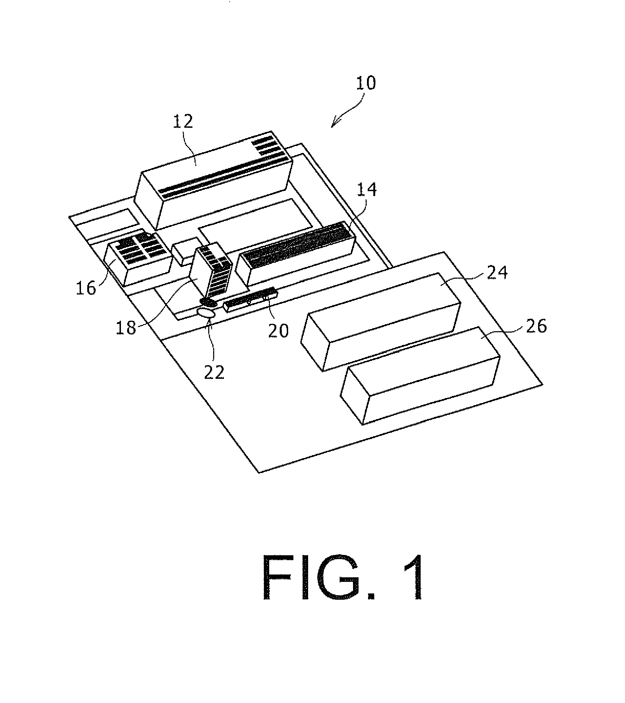

FIG. 1 is a schematic diagram illustrating a state of a facility complex 10 to which a management system 28 is applied. The facility complex 10 includes four office buildings in total; an A-building 12, a B-building 14, a C-building 16, and a D-buildlng 18, a power storage device building 20 in which a plurality of power storage devices are arranged, a facility 22 for feeding power to vehicles, and two factory buildings 24 and 26 as facilities. Though not illustrated in FIG. 1, the facility complex 10 can include a facility for feeding power to bicycle batteries, street lights, electric display boards and the like. Any of the facility 22 for feeding power to vehicles, the facility for feeding power to bicycle batteries, the street lights, and the electric display boards can be configured to include a photoelectric conversion module and a power storage device.

Here, each of the four office buildings in total; the A-building 12, the B-building 14, the C-building 16, and the D-building 18, and the facility 22 for feeding power to vehicles, is provided with a photoelectric conversion module and a power storage device which stores power generated thereby. In FIG. 1, the black band-shaped articles illustrated on the roof of each building and on the outer wall of the D-building 18 are photoelectric conversion modules. In the A-building 12, the B-building 14, and the C-building 16, shops, kitchens and the like are provided. The D-building 18 is supposed to have a DC power line for use of office equipment arranged. The photoelectric conversion module may be provided on the power storage device building 20, but the explanation will be given below assuming that the module is not provided here. The photoelectric conversion module may be also provided on the factory buildings 24 and 26, but the explanation will be given below assuming that the module is not provided here. The above configuration is exemplification for the explanation, and installation of the photoelectric conversion module, provision of a shop and a kitchen, arrangement of the DC power line and the like may be configured differently.

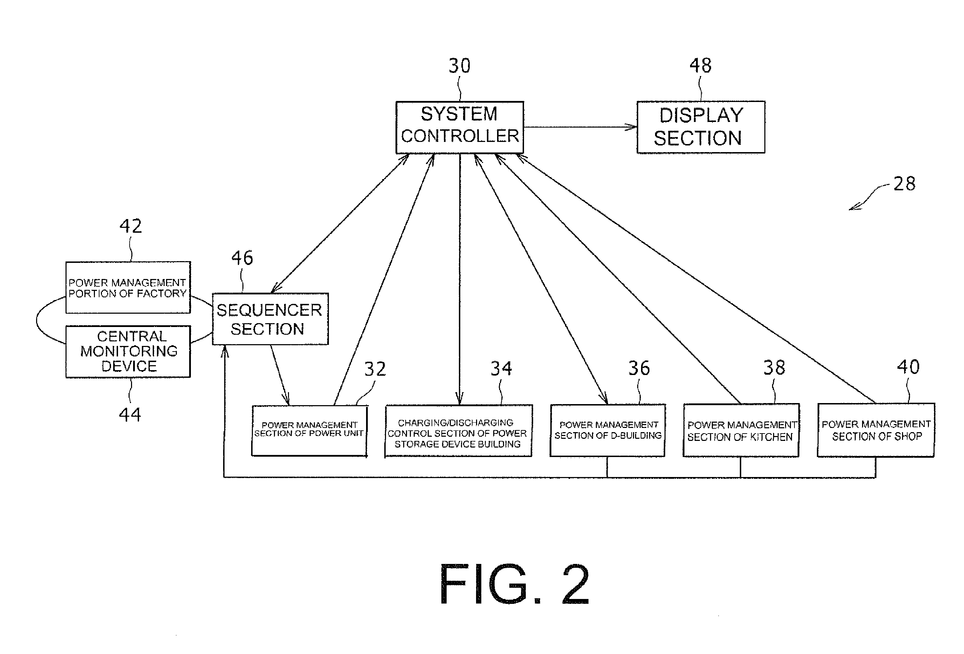

FIG. 2 is a diagram illustrating a flow of power information, instructions and the like in the management system 28 which manages power of the facility complex 10. Directions in which the power information, instructions and the like flow are indicated by arrows.

As illustrated in FIG. 2, the management system 28 includes a plurality of power management sections and a system controller 30 which performs power management of the entire facility complex 10. The facility complex 10 is divided into a plurality of management ranges, and power information of each management range is managed by different power management sections. The system controller 30 is connected to the power management sections by a communication element. FIG. 2 illustrates a power management section 32 of a power unit, a power management section 36 of the D-building, a power management section 38 of a kitchen, a power management section 40 of a shop, and a power management section 42 of a factory as the plurality of power management sections. In FIG. 2, a power management section of the A-building 12, a power management section of the B-building 14, and a power management section of the C-building 16 are omitted. Each of the power management sections is preferably provided so as not to overlap the management ranges of the other power management sections, and power management sections other than the above may be also provided.

The power management section 32 of the power unit has a function of performing management of power information relating to the plurality of power storage devices arranged in a distributed manner in the facility complex 10 and management of the power information relating to the photoelectric conversion modules arranged also in the distributed manner and transmitting the power information to the system controller 30. The power storage devices and the photoelectric conversion modules are also power-related devices, and the power management section 32 of the power unit has a function of managing the power information of the power-related devices.

The power information relating to generated power and the like of the photoelectric conversion modules included in the facility complex 10 and the power information relating to charged power and discharged power of the power storage devices included in the facility complex 10 and voltages, currents and the like of the power storage devices are managed by the power management section 32 of the power unit. The power information relating to the power storage devices preferably includes information relating to the temperatures of the power storage devices. The power information managed by the power management section 32 of the power unit is transmitted to the system controller 30.

The power storage device of the power storage device building 20 is charged with power of the external commercial power supply and discharges power required by the load of the facility complex 10. Therefore, the power storage devices in a number that can ensure a sufficient storage capacity are collectively arranged in the power storage device building 20. As described above, since the power information management of the power storage device building 20 is important in management of power of the entire facility complex 10, the section which manages the power information of the power storage device building 20 in the power management section 32 of the power unit is specifically referred to as a power management section of the power storage device building.

A charging/discharging control section 34 of the power storage device building 20 has a function of controlling charging/discharging the plurality of power storage devices in the power storage device building 20. The charging/discharging control of the power storage devices by the charging/discharging control section 34 of the power storage device building is performed by a charging/discharging instruction transmitted from the system controller 30.

The power management section 36 of the D-building has a function of managing the power information in the D-building 18. The D-building 18 has air conditioning, lighting, office equipment and the like as loads. The power information of power consumption and the like of these loads is transmitted to the system controller 30. It is assumed that the D-building 18 has a larger load power consumption than the other office buildings. Then, if the power for the overall load of the facility complex 10 runs short, an energy-saving control instruction is transmitted from the system controller 30 to the power management section 36 of the D-building. In FIG. 2, the arrows indicating the flow of the information are bidirectional because they indicate the flow of the power information and the flow of the energy-saving control instructions.

The power management section 38 of the kitchen has a function of managing the power information in the kitchen provided in the office building. The power information such as power consumption of kitchen appliances such as a cooker is transmitted to the system controller 30.

The power management section 40 of the shop has a function of managing the power information in the shop provided in the office building. The power information such as power consumption of sales floor equipment such as air conditioning, freezing and refrigerating showcases and the like is transmitted to the system controller 30.

The power management section 42 of the factory has a function of managing the power information in the factory buildings 24 and 26. The power information such as power consumption of factory devices such as machine tools, assembling machines and the like arranged in the factory buildings 24 and 26 is transmitted to the system controller 30.

A central monitoring device 44 is a device which monitors occurrence of abnormalities such as a failure in power states of the factory buildings 24 and 26. The monitoring result is transmitted to the system controller 30.

Operating states of the factory buildings 24 and 26 are affected by the contents of the power information of the power management section 32 of the power unit and the like. Therefore, if the power information transmitted from the power management section 32 of the power unit includes failure information, alarm information is transmitted from the system controller 30 to the power management section 42 of the factory and the central monitoring device 44.

A sequencer section 46 is a PLC (Programmable Logic Controller) connected to the photoelectric conversion modules and power converters provided in the distributed manner in the power management section 42 of the factory, the central monitoring device 44 and the like. The power converter includes a DC/AC converter which converts direct current of the photoelectric conversion module to alternating current. Information transmission/reception between the power management section 42 of the factory as well as the central monitoring device 44 and the system controller 30 is conducted by a communication line via this sequencer section 46. The power information of the photoelectric conversion modules and the power converters is transferred to the power management section 32 of the power unit by the communication line via this sequencer section 46. Therefore, if the power information includes failure information, the failure information is also transferred to the power management section 32 of the power unit.

If the failure relating to the power rise in any of the power management section 36 of the D-building, the power management section 38 of the kitchen or the power management section 40 of the shop, the failure information is transferred to the system controller 30 and the sequencer section 46.

If the failure information is transmitted, the system controller 30 outputs an alarm signal from an alarm signal output portion to the power management section 42 of the factory and the central monitoring device 44. Moreover, the failure information of the power management section 36 of the D-building, the power management section 38 of the kitchen or the power management section 40 of the shop is transferred to the power management section 42 of the factory and the central monitoring device 44 through the sequencer section 46. Therefore, the failure information of the power management section 36 of the D-building, the power management section 38 of the kitchen or the power management section 40 of the shop is transferred to the power management section 42 of the factory via two information transmission paths. The reason why the failure information is transmitted to the power management section 42 of the factory and the central monitoring device 44 is that a facility where it is manually managed in a direct or indirect manner by human being is assumed.

The system controller 30 is a first controller which produces power information of the entire facility complex 10 on the basis of the power information transmitted from the power management section 32 of the power unit, the power management section 36 of the D-building, the power management section 38 of the kitchen, the power management section 40 of the shop, and the power management section 42 of the factory. Moreover, the system controller 30 has a function of producing a charging/discharging instruction to the charging/discharging control section 34 of the power storage device building on the basis of the power information of the entire facility complex 10 and of transmitting this to the charging/discharging control section 34 of the power storage device building.

Moreover, the system controller 30 monitors communication abnormality between the power management section 32 of the power unit, the charging/discharging control section 34 of the power storage device building, the power management section 36 of the D-building, the power management section 38 of the kitchen, the power management section 40 of the shop, and the sequencer section 46 connected by the communication line. Then, in the case where the communication abnormality occurs, the system controller 30 has a function of outputting an abnormality signal. The system controller 30 also has a function of notifying the abnormality signal relating to the communication abnormality to the power management section 42 of the factory and the central monitoring device 44. Moreover, the system controller 30 has a function of transmitting an energy-saving control instruction to the power management section 36 of the D-building.

The system controller 30 has a function of producing data of power consumption of the facility complex 10, supplied power from the external commercial power supply, generated power of the photoelectric conversion modules, and charged/discharged power in the power storage device of the power storage device building 20, on the basis of the power information of the entire facility complex 10. Moreover, the system controller 30 has a function of calculating a saved energy amount and a CO₂ reduction amount of the entire facility complex 10 from this data. Moreover, the system controller 30 has a function of outputting the data of the power, the saved energy amount, and the CO₂ reduction amount and the like to a display section 48.

The saved energy amount can be calculated by acquiring a difference (power difference) between the actually consumed power and reference power consumption determined in advance from rated power consumption in accordance with the operating state of the load for the load of each facility. The reference power consumption according to the operating state is set for each of the power management section 36 of the D-building, the power management section 38 of the kitchen, and the power management section 40 of the shop. Then, the difference between the reference power consumption and the actually consumed power is acquired in a saved energy amount calculation portion of each power management section and this is transmitted to the system controller 30 as the saved energy amount in each power management section. The system controller 30 can obtain the saved energy amount of the entire facility complex 10 by collecting them.

The CO₂ reduction amount can be calculated by using the reduced amount of power supplied from the external commercial power supply and a conversion factor. That is, if a part of or whole of the power consumption of the facility complex 10 is borne by self-supplied power other than the external commercial power supply, the CO₂ reduction amount can be acquired by multiplying the self-supplied power value by the conversion factor. Therefore, assuming that "self-supplied power value = power value by solar power generation (solar power generation value)", the CO₂ reduction amount can be acquired by multiplying the power value of the solar power generation of the photoelectric conversion module included in the power information of the power management section 32 of the power unit by the conversion factor.

The power of the external commercial power supply is constituted by power from hydraulic power generation, power from nuclear power generation, power from thermal power generation and the like, and the hydraulic power generation among them uses natural energy and has the CO₂ reduction effect. The nuclear power generation also has a greater CO₂ reduction effect than the thermal power generation. Thus, if, for example, in the external commercial power supply supplied by an electricity company, power from the hydraulic power generation and power from the nuclear power generation are mainly used during the nighttime, and power from the thermal power generation is added during the daytime, the power storage devices in the power storage device building 20 are charged during the nighttime and discharged during the daytime. As a result, even if the supplied power value from the external commercial power supply in one day is the same, the CO₂ reduction amount becomes large. As described above, the CO₂ reduction amount can be acquired on the basis of the power information of the power storage devices in the power storage device building 20 subjected to charging/discharging control.

In selecting the external commercial power supply for charging the power storage device, if information of the CO₂ reduction amount by using the hydraulic power generation, the nuclear power generation or the like is provided by the power company, the power with larger CO₂ reduction amount is preferably selected on the basis of the information.

A method of charging/discharging control of the power storage devices in the power storage device building 20 has an influence on power consumption, energy saving and CO₂ reduction of the entire facility complex 10. As the contents of the charging/discharging control of the power storage devices in the power storage device building 20, they can be, for example, "discharge the device only on operating days of the factory buildings 24 and 26", "charge the device from 22:00 at night to 8:00 the following morning", "considering seasonal factors, discharge the device from 10:00 to 17:00 during the summer from July to September, and 8:00 to 22:00 during seasonal periods other than that" and the like can be considered. It is needless to say that the contents of the charging/discharging control may also be different to this.

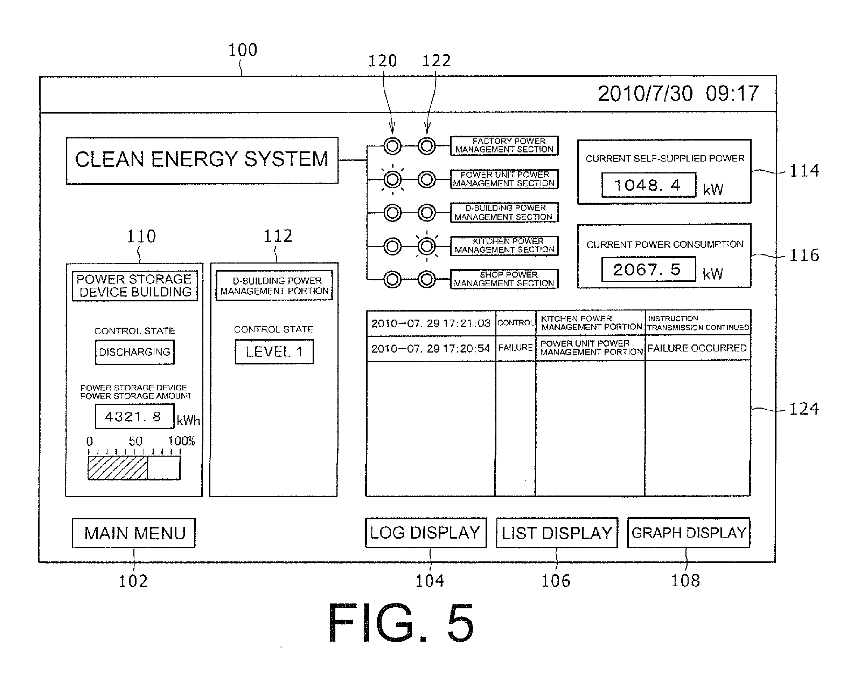

The display section 48 includes a display having a function of displaying data such as the saved energy amount, the CO₂ reduction amount and the like. The display section 48 is preferably an external display section allowing display particularly to the outside. The display to the outside includes disclosure of achievements of energy saving activities and achievements of CO₂ reduction activities by the facility complex 10 to an outside third party, in addition to the display for internal management. As the display manner, so-called digital signage such as an electronic signboard, an electronic bulletin board, video delivery and the like can be used. An example of a specific display screen of the display section 48 will be described later by referring to FIGS. 5 to 7.

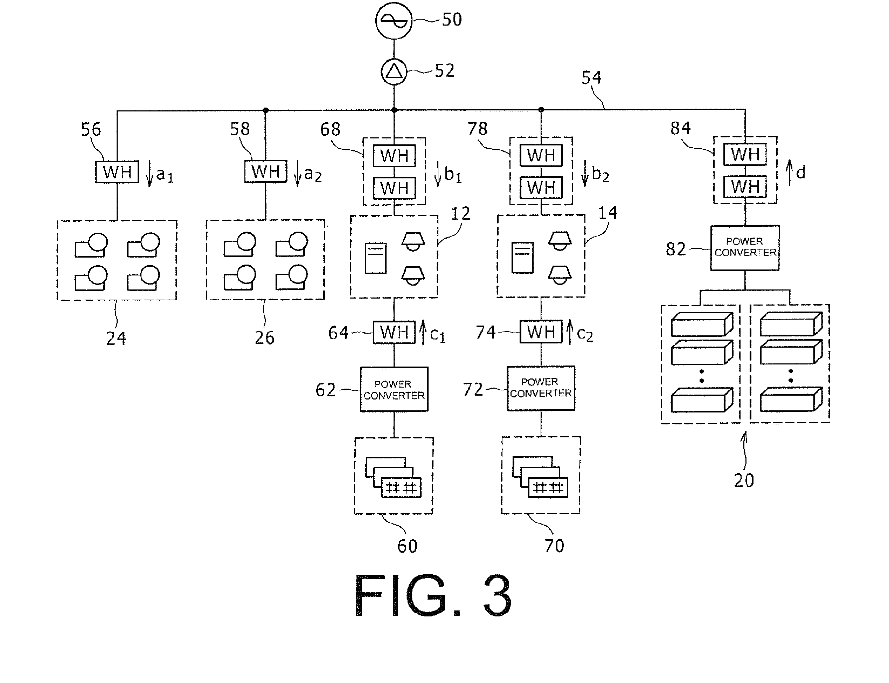

As described above, in order to acquire the saved energy amount and the CO₂ reduction amount, the consumed power of the loads, the generated power of the photoelectric conversion module, the charged/discharged power of the power storage devices in the power storage device building 20, and the supplied power from the external commercial power supply need to be obtained. FIG. 3 is a diagram for explaining a state of calculation of the consumed power and the like in the facility complex 10.

In FIG. 3, the flow of power in the facility complex 10 is illustrated. Here, the factory buildings 24 and 26, the A-building 12 and the B-building 14, as the office buildings, and the power storage device building 20 are illustrated as the exemplary facilities of the facility complex 10. The factory buildings 24 and 26 are illustrated as representing general facilities having loads but not provided with the photoelectric conversion modules, the A-building 12 and the B-building 14 as solar facilities having loads and provided with the photoelectric conversion modules, and the power storage device building 20 as a representative of the facility not having a load and not provided with a photoelectric conversion module. A facility having a load will be referred to as a load-type facility.

In FIG. 3, an external commercial power supply 50 is connected to an AC power supply line 54 via a backflow preventing device 52. The AC power supply line 54 is a power line through which power obtained by converting discharged power of the power storage device in the power storage device building 20 to AC, and surplus power that cannot be fully used by the load in the power obtained by converting the power generated by photoelectric conversion modules 60 and 70 to AC, flow as will be described later, in addition to the AC power from the external commercial power supply 50.

The factory buildings 24 and 26 are connected to the AC power supply line 54 via power detection units 56 and 58, respectively. FIG. 3 illustrates a state in which feed power supplied from the AC power supply line 54 to the factory building 24 is detected as a₁ and feed power supplied from the AC power supply line 54 to the factory building 26 is detected as a₂. The consumed power in the factory buildings 24 and 26 is obtained on the basis of power values detected by the power detection units 56 and 58 provided between power input/output units of the factory buildings 24 and 26 and the AC power supply line 54, respectively.

Photoelectric conversion modules 60 and 70 are provided in the A-building 12 and the B-building 14, respectively. Generated power of the photoelectric conversion modules 60 and 70 is converted to AC power by power converters 62 and 72, respectively, and supplied to the load of the A-building 12 and the load of the B-building 14 through the power detection units 64 and 74, respectively. FIG. 3 illustrates a state in which generated power supplied from the photoelectric conversion module 60 to the A-building 12 is detected as c₁ and generated power supplied from the photoelectric conversion module 70 to the B-building 14 is detected as c₂. The power supplied to the load of the A-building 12 and the B-building 14 by the photoelectric conversion modules 60 and 70 is obtained on the basis of the power values from solar power generation detected by the power detection units 64 and 74 provided between the power input portions of the A-building 12 and the B-building 14 and the output portions of the photoelectric conversion modules, respectively.

Moreover, the A-building 12 and the B-building 14 are connected to the AC power supply line 54 via power detection units 68 and 78, each being bidirectional. Here, the bidirectional power detection unit 68 is a power meter having a function capable of detecting both the feed power supplied from the AC power supply line 54 side to the A-building 12 side, and backward power supplied from the A-building 12 side to the AC power supply line 54 side. The bidirectional power detection unit 78 also has a function capable of detecting both the feed power supplied from the AC power supply line 54 side to the B-building 14 side and the backward power supplied from the B-building 14 side to the AC power line 54 side. If solar generation power more than is required for the load of the A-building 12, for example, is supplied from the side of the photoelectric conversion module 60 to the A-building 12, the surplus power is supplied to the AC power supply line 54. This is the backward power.

FIG. 3 illustrates a state in which the feed power supplied from the AC power supply line 54 side to the A-building 12 is detected as b₁ and the feed power supplied from the AC power supply line 54 side to the B-building 14 is detected as b₂. If b₁ and b₂ are detected, there is no generation of the backward power from the photoelectric conversion modules 60 and 70. That is, the power value exchanged between the A-building 12, as well as the B-building 14, and the Ac power supply line 54 is obtained on the basis of the feed power value or the backward power value detected by the bidirectional power detection units 68 and 78.

Therefore, the entire status of the power consumption in the A-building 12 and the B-building 14 can be obtained by a consumed power calculation portion on the basis of the power value from the solar power generation detected by the power detection units 64 and 74 and the feed power value or the backward power value detected by the bidirectional power detection units 68 and 78.

The power storage device building 20 is connected to the AC power supply line 54 via a bidirectional power converter 82 and a bidirectional power detection unit 84. Here, the bidirectional power converter 82 has a function capable of converting both from AC to DC and from DC to AC. Therefore, if the power storage device building 20 is to be charged, the AC power of the AC power supply line 54 is converted to DC power by the bidirectional power converter 82 and supplied to the power storage device, while if the power storage device building 20 is conversely to be discharged, the DC power of the power storage device is converted to AC power and supplied to the AC power supply line 54.

In FIG. 3, the discharged power value from the power storage device building 20 to the AC power supply line 54 is indicated as d. The charged power value supplied from the AC power supply line 54 side to the power storage device building 20 and the discharged power value discharged from the power storage device building 20 to the AC power supply line 54 side can be obtained by the power detection unit 84 provided between the input/output portion of the bidirectional power converter 82 and the AC power supply line 54.

As described above, by using the power values detected by the power detection units 56, 58, 64, 74, 68, 78, and 84, respectively, the self-supplied power value and the consumed power value of the facility complex 10, and the supply power value from the external commercial power supply 50, can be calculated as follows.

The power value of the solar power generation which is the self-supplied power value is acquired by totaling the detected values of the power detection units on the photoelectric conversion module side in the solar facilities. In the example in FIG. 3, the self-supplied power value = (c₁ + c₂). On the basis of this self-supplied power value, the CO₂ reduction amount can be calculated by using a predetermined conversion factor. If the CO₂ reduction amount is calculated by the charging/discharging control of the power storage device as above, the CO₂ reduction amount of the entire facility complex 10 can be acquired by adding up the power values of each solar cell. The power value of the solar power generation of the entire facility complex 10 is calculated by a self-supplied power calculation portion included in the system controller 30.

The consumed power value of the facility complex 10 can be acquired by adding the total value of the detected values of the power detection units 56 and 58 of each factory building to the total value of the detected values of the power detection units 68 and 78 of the AC power supply line 54 in each solar facility, and by further adding the total value of the detected values of power detection units 64 and 74 on the photoelectric conversion module side of each solar facility to the added value. In the example in FIG. 3, the consumed power value = (b₁ + b₂) + (a₁ + a₂) + (c₁ + c₂). The consumed power value of the entire facility complex 10 is calculated by the consumed power calculation portion included in the system controller 30.

The supplied power value from the external commercial power supply 50 can be acquired by adding the total value of the detected values of the power detection units 56 and 58 of each factory building to the total value of the detected values of the power detection units 68 and 78 on the AC power supply line 54 side of each solar facility, by subtracting the total value of the detected values of the power detection units 64 and 74 on the photoelectric conversion module side of each solar facility from the added value, and by further subtracting the discharged power value of the power detection unit 84 of the power storage device building. In the example in FIG. 3, the supplied power value from the external commercial power supply = (b₁ + b₂) + (a₁ + a₂) - (c₁ + c₂) -d. Since b and d are bidirectional, the directions of the arrows shown in FIG. 3 are set as positive. The supplied power value from the external commercial power supply is calculated by a supplied power calculation portion included in the system controller 30.

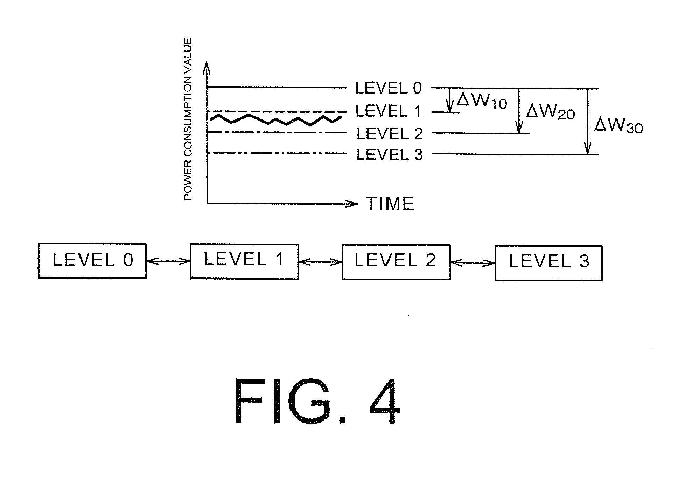

The consumed power value of the entire facility complex 10 is acquired as above, and the saved energy amount can be calculated on the basis of this actually consumed power thus obtained and the reference power consumption determined in advance in accordance with the operating state of the load. The state is illustrated in FIG. 4. In FIG. 4, the energy saving effect is divided into four levels, and each is indicated as level 0, level 1, level 2, and level 3. The consumed power is detected by a consumed power obtaining portion of each power management section.

Level 0 corresponds to the reference power consumption determined in advance in accordance with the operating state of the load. At this level 0, the energy saving effect is zero. Level 1 indicates that the consumed power value is reduced from level 0 only by ΔW₁₀, and the energy saving effect is ΔW₁₀. Similarly, level 2 indicates that the consumed power value is reduced from level 0 only by ΔW₂₀, and the energy saving effect is ΔW₂₀, and level 3 indicates that the consumed power value is reduced from level 0 only by ΔW₃₀, and the energy saving effect is ΔW₃₀. Level 2 has a greater energy saving effect than level 1, and level 3 has a greater energy saving effect than level 2 in the above-described example.

Energy saving can be realized by setting level 1 to level 3 with respect to level 0, and by lowering the power consumption of the load as above. The setting of level 1 to level 3 is different depending on the nature of the load.

For example, in the A-building 12, the B-building 14, and the C-building 16, which are office buildings, the level of the energy saving effect is set from level 1 to level 3 by combining adjustment of set temperatures of the air conditioning, illuminance adjustment of the lighting, stopping the air conditioning and turning-off the lighting in a space with no people and the like. In the case of the D-building 18, since the DC power is consumed, the level of the energy saving effect can be set by further combining control of setting of the normal state to a sleep node and the like for the office equipment which consumes DC power. In the case of the kitchen, level 1 to level 3 can be set by combining time control such that time of adjustment of set temperatures of air conditioning, time of illuminance adjustment of lighting, time of starting preparation of cooking appliances are matched with time during which the kitchen is actually used and the like. In the case of the shop, level 1 to level 3 can be set by combining control such that the air-conditioning time and the lighting time are matched with the operating hours, or by setting the normal states of the freezing and refrigerating showcases to an energy saving mode and the like. In the case of the factory building, a relationship between an operating plan and power consumption of the load is examined in advance, an equalization level of the power consumption of the load is divided into several ranks, and this can be set to level 1 to level 3.

The energy saving effect corresponding to level 1 to level 3 set in accordance with the nature of the load is registered in advance, and the system controller 30 can obtain it.

The system controller 30 calculates a power shortage amount of the facility complex 10 in accordance with the power information. Then, an energy-saving instruction portion of the system controller 30 creates an energy saving instruction so as to control energy saving according to the power shortage amount and transmits it to at least one power management section. The energy saving instruction is an instruction of control such that the level at which the energy saving effect to compensate for the power shortage amount can be obtained is selected, and the selected energy saving effect is exerted. As a result, the power shortage amount can be compensated for.

When the system controller 30 selects the level at which the energy saving effect can be obtained, selection is made in accordance with a selection order of energy saving. The selection order can be set in advance by a selection order setting portion of the system controller 30 in accordance with the size of the energy saving effect with respect to the load in the management range of each power management section.

In FIG. 4, a shift of the power consumption in the management range of the power management section which received the energy saving instruction to execute level 1 is indicated by a bold line. In this case, ΔW₁₀ is ensured as the energy saving effect.

FIG. 5 is a diagram illustrating a display screen 100 of the display section 48 which displays an action of the system controller 30. This display section 48 can be provided in the vicinity of the system controller 30 so that people can see it. Here, the display screen 100 indicates the state of a clean energy system of the facility complex 10. On the lower side of the display screen 100, selection buttons for a main menu 102, a past log display 104, a list display 106, and a graph display 108 are illustrated. FIG. 4 shows the screen according to the main menu 102.

A first display item 110 is a portion displaying the state of the power storage device building 20. Here, it is illustrated that the control state of the power storage device is during discharging, and the stored power amount of the power storage device is 4321.8 kWh and approximately 60% of the rated capacity. A second display item 112 is a portion displaying the state of the control by the power management section 36 of the D-building. Here, level 1 is displayed, and level 1 can be defined as control under the energy-saving control instruction, for example.

A third display item 114 and a fourth display item 116 are portions displaying current self-supplied power and consumed power. Here, it is displayed in the third display item 114 that the self-supplied power, which is the power from solar power generation, is 1048.4 kW, and it is displayed in the fourth display item 116 that the consumed power is 2067.5 kW. The self-supplied power value indicated in the third display item 114 can be displayed after being converted to the CO₂ reduction amount.

A first lamp group 120 and a second lamp group 122 are portions displaying the state of each power management section. The first lamp group 120 is constituted by lamps that are lit when a failure occurs. The second lamp group 122 is constituted by lamps that are lit in the case of communication abnormality. Here, the lamp corresponding to the power management section 32 of the power unit in the first lamp group 120 is lit, and occurrence of a failure in the power management section 32 of the power unit is indicated. Also, the lamp corresponding to the power management section 38 of the kitchen in the second lamp group 122 is lit, and occurrence of communication abnormality with the power management section 38 of the kitchen is indicated. A fifth display item 124 is a portion displaying a detailed state on the failure state and the communication abnormality displayed by the first lamp group 120 and the second lamp group 122. By means of this display, when, where and what occurred, and how the present status is, can be grasped at a glance.

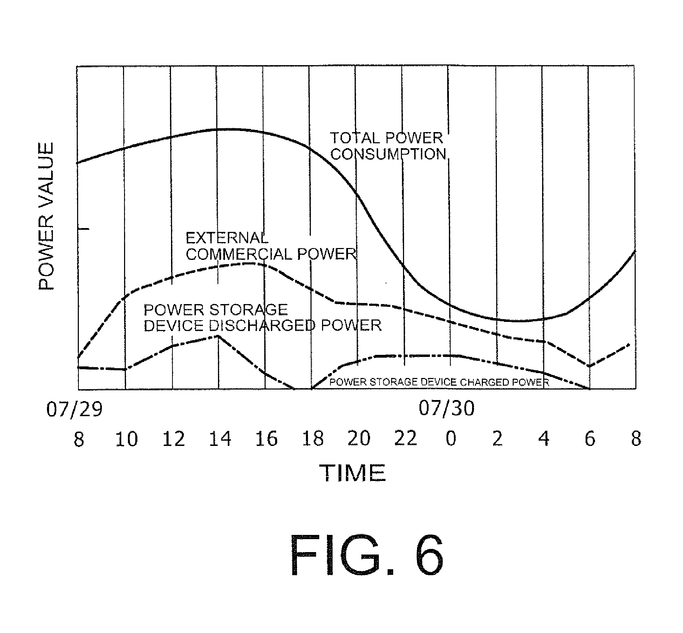

FIG. 6 is a diagram illustrating an example of the display screen appearing when the graph display button 108 in FIG. 5 is pressed. Here, time of day is shown on the lateral axis and the power value on the vertical axis. A shift of the consumed power value of the entire facility complex 10, a shift of the discharged power value and the charged power value of the power storage device in the power storage device building 20, and a shift of the supplied power value from the external commercial power supply 50 are displayed. By means of this display, it is understood that the supplied power value from the external commercial power supply 50 is reduced with respect to the entire consumed power value. This power value difference corresponds to contribution to the CO₂ reduction. This power value difference is realized by contribution of the self-supplied power value from the solar power generation. Also, it is understood that the supplied power amount from the external commercial power supply 50 during the daytime is suppressed by charging the power storage device during the nighttime and by discharging the power storage device during the daytime. A shift of the self-supplied power value can be added to this display.

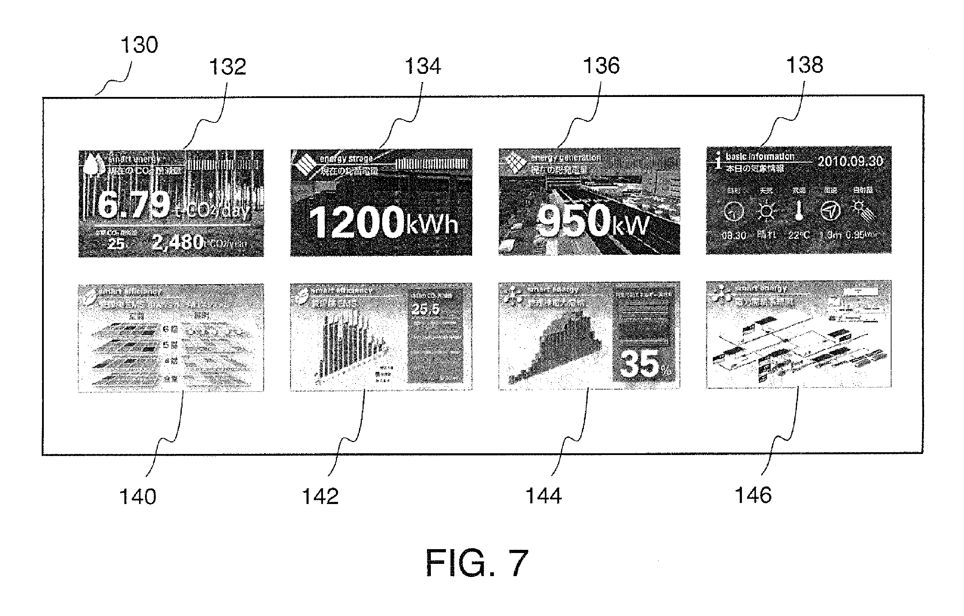

FIG. 7 is a diagram illustrating an example of another display screen 130. The display section 48 displaying this display screen 130 is installed in an entrance hall of the facility included in the facility complex 10, for example, so that general guests and the like can see it. Here, the screen is divided into eight display parts: video display 132 of CO₂ reduction information, video display 134 of power storage information, video display 136 of power generation information, video display 138 of weather information, video display 140 of lighting control information, graph display 142 of the D-building energy saving, graph display 144 of the D-building power supply and demand, and video display 146 of the power information are shown.

### INDUSTRIAL APPLICABILITY

The management system according to the present invention can be used for power management of a facility which consumes electric power.

### REFERENCE SIGNS LIST

10 facility complex, 12 A-building, 14 B-building, 16 C-building, 18 D-building, 20 power storage device building, 22 facility for feeding power to vehicles, 24, 26 factory building, 28 management system, 30 system controller, 32 power management section of power unit, 34 charging/discharging control section of power storage device building, 36 power management section of D-building, 38 power management section of kitchen, 40 power management section of shop, 42 power management section of factory, 44 central monitoring device, 46 sequencer section, 48 display section, 50 external commercial power supply, 52 backflow preventing device, 54 AC power supply line, 56, 58, 64, 74, 68, 78, 84 power detection unit, 60, 70 photoelectric conversion module, 62, 72, 82 power converter, 100, 130 display screen, 102 main menu, 104 log display, 106 list display, 108 graph display, 110 first display item, 112 second display item, 114 third display item, 116 fourth display item, 124 fifth display item, 120 first lamp group, 122 second lamp group, 132 video display of CO₂ reduction information, 134 video display of power storage information, 136 video display of power generation information, 138 video display of weather information, 140 video display of lighting control information, 142 graph display of the D-building energy saving, 144 graph display of the D-building power supply and demand, 146 video display of the power information.

## Claims

1. A management system comprising:
a plurality of power management sections which manage power information of a facility complex including a plurality of facilities divided into a plurality of management ranges; and
a system controller connected to the plurality of power management sections with communication elements, for obtaining the power information in each of the management ranges and controlling the power information of the whole of the facility complex on the basis of the obtained power information, wherein
the system controller creates a charging/discharging instruction on the basis of the power information of the whoe of the facility complex and transmits the charging/discharging instruction to a charging/discharging control section.

2. The management system according to claim 1, wherein
the facility complex has a load-type facility consuming power;
a power management section of a load-type facility including th load-type facility in the management range includes:
a consumed power obtaining portion for obtaining actually consumed power of the load in the load-type facility; and
a saved energy amount calculation portion for calculating a saved energy amount on the basis of a power difference which is a difference between the actually consumed power and a reference power consumption determined in advance in accordance with an operating state of the load; and
the system controller produces the charging/discharging instruction on the basis of the saved energy amount of the whole of the facility complex.

3. The management system according to claim 2, wherein
the system controller includes:
a selection order setting portion for setting a selection order of energy saving in advance in accordance with a size of an energy saving effect with respect to the load in the management range of at least one of the power management sections; and
an energy-saving instruction portion for calculating a power shortage amount of the facility complex in accordance with the power information, and instructing execution of a control method of the energy saving in compliance with the selection order of the energy saving in accordance with the power shortage amount to at least one of the power management sections.

4. The management system according to claim 2, wherein
the facility complex includes:
a solar facility having a photoelectric conversion module and a general facility in which the photoelectric conversion module is not provided;
a power detection unit on an AC power supply line side provided between an AC power supply line connected to an external commercial power supply and a power input/output portion on the AC power supply line side of the solar facility, for detecting a bidirectional power value, that is, a feed power value supplied from the AC power supply line side to the solar facility and a backward power value supplied to the AC power supply line side through the solar facility;
a power detection unit on the photoelectric conversion module side provided between a power input portion on the photoelectric conversion module side of the solar facility and an output portion of the photoelectric conversion module, for detecting a power value of solar power generation supplied from the photoelectric conversion module to the solar facility;
a consumed power calculation portion of the solar facility for calculating the actually consumed power of the load in the solar facility on the basis of the feed power value or the backward power value detected by the power detection unit on the AC power supply line side and a power value of the solar power generation detected by the power detection unit on the photoelectric conversion module side; and
a power detection unit of the general facility provided between a power input/output portion of the general facility and the AC power supply line, for detecting the feed power value supplied from the AC power supply line side to the general facility; and
a consumed power calculation portion of the general facility for calculating the actually consumed power of the load in the general facility on the basis of the feed power value detected by the power detection unit of the general facility.

5. The management system according to claim 4, wherein
said system controller further has:
an overall consumed power calculation portion for calculating a consumed power value of the whole of said facility complex; and
an overall self-supplied power calculation portion for calculating a power value of solar power generation of the whole of the facility complex; and
the calculated consumed power value of the whole of the facility complex and the power value of the solar power generation of the whole of the facility complex are outputted to a display section.

6. The management system according to claim 5, wherein
the facility complex includes a power storage device building having a power storage device connected to the AC power supply line through a bidirectional power converter;
a power management section of a power storage device building including the power storage device building as the management range has a power detection unit of the power storage device building provided between an input/output portion on the AC power supply line side of the bidirectional power converter and the AC power supply line and detecting bidirectional power values of a charged power value supplied from the AC power supply line side to the power storage device building and a discharged power value discharged from the power storage device building to the AC power supply line side; and
the system controller has:
an overall consumed power calculation portion for calculating the consumed power value of the entire facility complex on the basis of a detected value of the power detection unit on the AC power supply line side of the solar facility, a detected value of the power detection unit of the general facility, and a detected value of the power detection unit on the photoelectric conversion module side of the solar facility; and
a supplied power calculation portion of an external commercial power supply for calculating a supplied power value from the external commercial power supply on the basis of the detected value of the power detection unit on the AC power supply line side of the solar facility, the detected value of the power detection unit of the general facility, the detected value of the power detection unit on the photoelectric conversion module side of the solar facility, and the discharged power value detected by the power detection unit of the power storage device building.

7. The management system according to claim 1, further comprising:
a display section for displaying data of the saved energy amount of the whole of the facility complex.

8. The management system according to claim 5, further comprising:
a display section for displaying data of the consumed power value of the whole of the facility complex and data of a power value of the solar power generation.
